# EUROPEAN PATENT SPECIFICATION

(11) **EP 2 008 870 B1**
(45) Date of publication and mention of the grant of the patent: **30.05.2012**
(21) Application number: 08155714.2
(22) Date of filing: 06.05.2008
(51) Int. Cl.: B60R 1/08, G02F 1/1335, G02B 5/30

(54) **Liquid crystal glare-proof mirror**
Blendfreier Flüssigkristallspiegel
Miroir antireflet à cristaux liquides

(30) Priority: 28.06.2007 JP 2007170102
(43) Date of publication of application: 31.12.2008
(73) Proprietor: Murakami Corporation, Shizuoka 420-8550 (JP)
(72) Inventor: Suzuki, Norihiro c/o Murakami Corporation, Shizuoka 426-8601 (JP); Unno, Noriyuki c/o Murakami Corporation, Shizuoka 426-8601 (JP); Sato, Hidenori c/o Murakami Corporation, Shizuoka 426-8601 (JP)
(74) Representative: von Kreisler Selting Werner

(56) References cited:
- EP-A2- 1 450 200
- DE-A1- 2 808 260
- DE-A1- 3 302 630
- US-A- 4 664 479

## Description

The present invention relates to a liquid crystal glare-proof mirror used for an inner mirror or an outer mirror of a vehicle, for example.

Conventionally, there has been known a liquid crystal glare-proof mirror in which a vertically aligned polarizing plate, a liquid crystal cell, a horizontally aligned polarizing plate and a reflecting mirror are laminated in order (as disclosed in JP Unexamined Patent Publication (Kokai) No.57-102602) and DE 28 08 260 A1, which document shows the features of the pre-amble of claim 1.

The liquid crystal glare-proof mirror disclosed in JP Unexamined Patent Publication (Kokai) No.57-102602 transmits vertically polarized light through a vertically aligned polarizing plate to the liquid crystal cell and switches between a glare-proof mode and a non-glare-proof mode by applying voltage to the liquid crystal cell.

EP 1450200 A1 discloses a polarizer, comprising: a micro-lens array or micro-prism array as a means converting an incoming non-polarized light into a plurality of identical non-polarized light beams; a polarizing means dividing said plurality of non-polarized light beams into polarized transmitted and reflected light beams having different polarizations; a means for changing of the polarization and the direction of the light beams reflected from said polarizing means, thereby substantially converting light beams, re-reflected from said means for changing of the polarization, to same polarization and direction as light beams, transmitted through said polarizing means; said means for changing of the polarization and direction of the light beams comprises a sectioned mirror; said sectioned mirror is optically co-ordinated with said micro-lens array or micro-prism array.

US 4,664,479 discloses a non-glaring type reflector employing a liquid crystal layer which is composed of a liquid crystal matrix and dichroic coloring matter, which provides a dynamic scattering effect or phase transition effect by applying an electric field.

In the conventional liquid crystal glare-proof mirror, there has been a problem that part of reflected light becomes extraordinary rays when voltage is not applied because the behavior of liquid crystal molecules in the liquid crystal cell is disordered when voltage is not applied to the liquid crystal cell.

An object of the present invention is to provide a liquid crystal glare-proof mirror which enables to reduce extraordinary ray generated in a liquid crystal cell.

A first aspect of the present invention provides a liquid crystal glare-proof mirror including a first polarizing plate for transmitting a first polarization component of incident light; a second polarizing plate for transmitting a second polarization component of the incident light; and a liquid crystal cell disposed between the first polarizing plate and the second polarizing plate, at least either one of the first polarizing plate and the second polarizing plate being formed of material having refractive index anisotropy exhibiting a different refraction of the incident light that varies depending on an angle at which the incident light comes into the either one of the first polarizing plate and the second polarizing plate.

In the aforementioned liquid crystal glare-proof mirror, the second polarizing plate reflects a third polarization component perpendicular to the second polarizing component, liquid crystal molecules in the liquid crystal cell are aligned in such a manner that the liquid crystal cell exhibits polarization rotatory power on the incident light when voltage is not applied to the liquid crystal molecules and the liquid crystal cell does not exhibit the polarization rotatory power on the incident light when voltage is applied to the liquid crystal molecules, and the first polarizing plate and the second polarizing plate are disposed in such a manner that the first polarization component is perpendicular to the third polarization component and the first polarization component is parallel to the second polarization component.

In the aforementioned liquid crystal glare-proof mirror, an optical absorption member for absorbing the second polarization component transmitted through the second polarizing plate is disposed opposite to the side of the second polarizing plate on which the liquid crystal cell is disposed.

The aforementioned liquid crystal glare-proof mirror further includes a surrounding light detection device for detecting a quantity of light around a vehicle; a back light detection device for detecting a quantity of light coming from a rear side of the vehicle; a liquid crystal cell control device for comparing the quantity of light around the vehicle detected by the surrounding light detection device and the amount of the light coming from the rear side of the vehicle detected by the back light detection device, controlling the liquid crystal glare-proof mirror to be glare-proofed when the quantity of the light coming from the rear side of the vehicle is greater than the quantity of the light around the vehicle at not less than a predetermined value, and controlling the liquid crystal glare-proof mirror not to be glare-proofed when the quantity of the light coming from the rear side of the vehicle is smaller than or equal to the quantity of the light around the vehicle or the quantity of the light coming from the rear side of the vehicle is greater than the quantity of the light around the vehicle in less than the predetermined value.

The aforementioned liquid glare proof mirror further includes a delay unit for delaying a timing at which a detection signal output from the surrounding light detection device and a detection signal output from the back light detection device are input to the liquid crystal cell control device.

In the aforementioned liquid crystal glare-proof mirror, the liquid crystal cell control device includes an oscillation unit for oscillating a control signal which controls the liquid crystal cell.

Other features and advantages of the present invention will become more apparent from the following detailed descriptions of the invention when taken in conjunction with the accompanying drawings.
FIG. 1A is an exploded perspective view of the liquid crystal glare-proof mirror 100.
FIG. 1B is a perspective view showing the liquid crystal glare-proof mirror 100 after the mirror 100 is assembled.
FIG.2 is a cross-sectional view showing the internal structure of a mirror body 10 shown in FIG. 1.
FIG. 3 is a perspective view showing the structure of a reflection polarizing plate 10c shown in FIG.2.
FIG. 4A is a front view of the liquid crystal in the non-display mode while in the non-glare-proof mode.
FIG. 4B is a schematic view showing a light passing through the mirror body 10 when the liquid crystal glare-proof mirror 100 is in the non-display mode while in the non-glare-proof mode.
FIG. 5A is a front view of the liquid crystal glare-proof mirror in the non-display mode while in the glare-proof mode.
FIG. 5B is a schematic view showing a light passing through the mirror body 10 when the liquid crystal glare-proof mirror 100 is in the non-display mode while in the glare-proof mode.
FIG. 6 is a circuit diagram illustrating the example 1 of the liquid crystal cell control circuit.
FIG. 7 is a circuit diagram illustrating the example 2 of the liquid crystal cell control circuit.

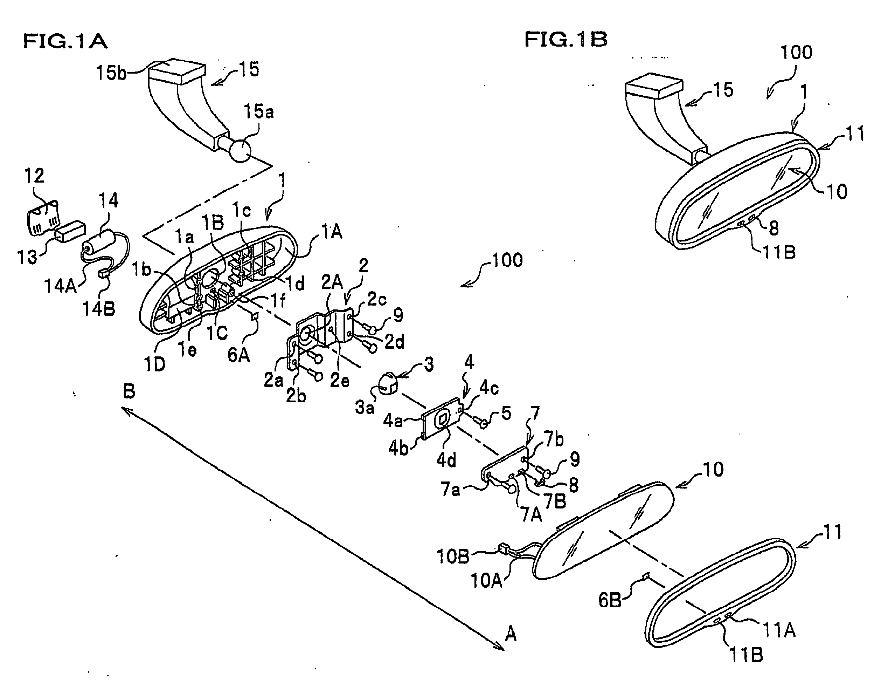

Embodiment of the present invention is described with reference to the accompanying drawings. The external appearance of a liquid crystal glare-proof mirror 100 is described below with reference to FIG. 1. FIG. 1 is a view showing the external appearance of the liquid crystal glare-proof mirror 100 according to the embodiment of the present invention. FIG. 1A is an exploded perspective view of the liquid crystal glare-proof mirror 100. FIG. 1B is a perspective view showing the liquid crystal glare-proof mirror 100 after the mirror is assembled.

The liquid crystal glare-proof mirror 100 mainly includes a body 1, a support 2, a bush 3, a plate 4, a screw 5, sensor covers 6A, 6B, a plate circuit 7, a button 8, tapping screws 9, a mirror body 10, a ring 11, a battery cover 12, a seal 13, a battery 14, a stay 15. The liquid crystal glare-proof mirror 100 is assembled by these parts.

The body 1 is a container having an opening 1A which meets the outside shape of the mirror body 10. The body 1 also includes screw holes 1a, 1b, 1c and 1d for fixing the support 2, screw holes 1e, 1f for fixing the plate circuit 7. The body 1 further includes on the bottom surface of the body 1 which is opposed to the opening 1A an installation hole 1B into which the stay 15 is inserted, and a hole 1C through which a surrounding light sensor7C, which is described later, detects surrounding light via the sensor cover 6A. The body 1A is also provided with a storage portion 1D for storing a battery 14.

The support 2, the bush 3 and the plate 4 are members for installing the stay 15. The support 2 includes screw holes 2a, 2b, 2c, 2d corresponding to the screw holes 1a, 1b, 1c, 1d. Four tapping screws 9 are inserted into the screw holes 2a, 2b, 2c, 2d and then screwed into the screw holes 1a, 1b, 1c, 1d to fix the support 2 to the body 1. The support 2 includes an installation hole 2A corresponding to the installation hole 1B. The support 2 also includes a screw hole 2e for fixing the plate 4.

The bush 3 is formed in a substantially hemispheric body having an opening (not show) facing in the direction indicated by an arrow B in FIG. 1A. A cutout 3a is formed at the opening side of the bush 3. The bush 3 is fixed between the support 2 and the plate 4 with its opening side pressed along the circumference of the installation hole 2A.

Protrusions 4a, 4b are formed on the plate 4 and are fitted into cutouts (not shown) formed in the support 2. A hole 4c corresponding to the screw hole 2e is also formed in the plate 4. The screw 5 is inserted into the hole 4c and then screwed into the screw hole 2e to fix the plate 4 to the support 2 with the bush 3 sandwiched between the plate 4 and the bush 3. The plate 4 also includes a bush-axis receiving portion which is raised in a substantially hemispheric shape.

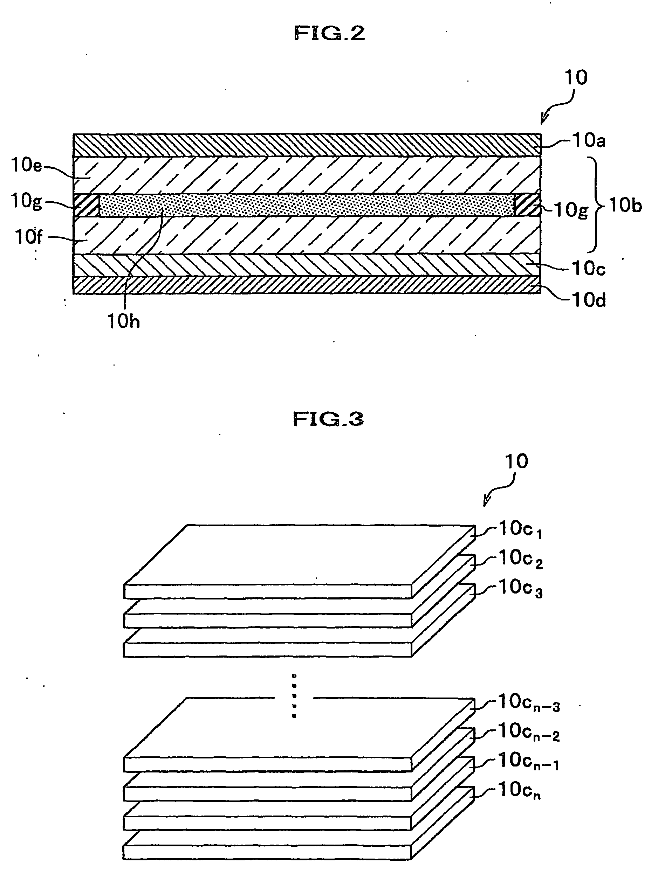

The plate circuit 7 includes a circuit for controlling a liquid crystal cell 10b (see FIG.2) which is formed by mounting various electronic components on a print board. The plate circuit 7 also includes holes 7a, 7b corresponding to the screw holes 1e, 1f. The tapping screws 9 are inserted into the holes 7a, 7b and then screwed into the screw holes 1e, 1f to fix the plate circuit 7 to the body 1. A surrounding light sensor (not shown) disposed on the back side of the plate circuit 7 in FIG. 1A, a backward light sensor (backward light-amount detection means) 7A and the power switch 7B covered by the button 8 are mounted on the plate circuit 7.

The mirror body 10 is designed to adjust the amount of reflected light by switching between a non-glare-proof mode and a glare-proof mode based on the relationship of the light volume of surrounding light and that of back light. To be more specific, the mirror body 10 is formed by laminating a first polarizing plate (not shown in FIG. 1A) which transmits a particular first polarization component of incident light as transmitted light and a second polarizing plate (not shown in FIG. 1A) which transmits a particular second polarization component of the incident light as transmitted light and sandwiching a liquid crystal cell (not shown in FIG. 1A) therebetween. A cable 10A for supplying electricity to the liquid crystal cell is also connected to the mirror body 10A and an end of the cable 10A is provided with a socket 10B, The internal structure of the mirror body 10 is described later in detail. The description of FIG. 1A. continues herein.

A ring 11 is an elastic body for fixing the mirror body 10 to the body 1. The outer circumference of the mirror body 10 meets the inner circumference of the ring 11, and the ring 11 is fixed to the circumferential edge of the body 1. The ring 11 includes a hole 11A through which the button 8 protrudes outside, and a hole 11B through which a backward light sensor 7A detects back light via the sensor cover 6 B.

A battery cover 12 covers an opening (not shown) of the storage portion 1D. A seal 13 prevents the battery 14 from being moved in a space of the storage portion 1D. A cable 14A is connected to a terminal of the battery 14 and the other end of the cable 14A is provided with a socket 14B. Although, in this specification, each of the socket 14B and the socket 10B is connected to a connecting terminal (not shown) on the plate circuit 7, wiring is not limited to this as long as both of the socket 14B and the socket 10B are electrically connected.

A stay 15 is for attaching the liquid crystal glare-proof mirror 100 to a ceiling or the like of a vehicle (not shown). An axle-center portion 15a, which is a. spherical body, is formed at an end of the stay 15. The axle-center portion 15a is inserted into the installation hole 1B and the installation hole 2A and is gripped by the bush 3. The bush 3 allows the body 1 to be rotatably attached to the stay 15 at a desired angle. An upper surface portion 15B of the stay 15 is closely attached to a ceiling, a front window or the like with an adhesive agent or the like.

As shown in FIG.1B, the liquid crystal glare-proof mirror 100 is configured in such a manner that the body 1 to which the mirror body 10 is fixed by the ring 11 is further attached to a vehicle (not shown) by the stay 15. A driver presses the button 8A to use a glare-proof function.

Internal structure of the mirror body 10 is described below. FIG.2 is a cross-sectional view showing the internal structure of the mirror body 10 shown in FIG. 1A. The lower side of FIG. 2 shows the inward of the body 1 (the side in the direction indicated by the arrow B in FIG. 1A) and the upper side of FIG. 2 shows the outward of the opening 1A of the body 1 (the side in the direction indicated by an arrow A in FIG. 1A). The mirror body 10 is configured in such a manner that a polarizing plate 10a, a liquid crystal cell 10b, a reflection polarizing plate (also referred to as a "second polarizing plate")10c, an optical absorption member 10d are laminated as shown in FIG.2.

The polarizing plate (also referred to as a "first polarizing plate") 10a ejects to the liquid crystal cell 10b a particular first polarization component of incident light coming from the upper side of FIG. 2 as transmitted light. In the embodiment, the first polarization component is assumed to be a vertical polarization component. The polarizing plate 10a transmits to the upper side of FIG. 2 the first polarization component of incident light coming from the liquid crystal cell 10b as transmitted light. A driver forms an image on his or her retina according to the transmitted light, whereby the driver can check the rear of a vehicle.

The liquid crystal cell 10b is disposed on the back of the polarizing plate 10a and includes two control areas thereon, each of which can be controlled independently. The liquid crystal cell 10b functions as a shutter which transmits or blocks light. The liquid crystal cell 10b is configured by disposing a liquid crystal 10h between glass substrates 10e and 10f in which the transparent electrodes (not shown) are wired. In this embodiment, the liquid crystal 10h is a TN (Twisted Nematic) liquid crystal. More specifically, the liquid crystal molecules x are aligned in such a manner that incident light is rotated when no voltage is applied to the transparent electrodes (not shown) on the glass substrates 10e and 10f, whereas the incident light is not rotated when voltage is applied to the transparent electrodes. A sealing member (spacer) 10G is also disposed between the glass substrates 10e and 10f.

The reflection polarizing plate (the second polarizing plate) 10c ejects a particular second polarization component of incident light as transmitted light and also ejects a third polarization component which is perpendicular to the second polarization component of the transmitted light as reflected light. In this embodiment, the second polarization component the reflection polarizing plate 10c is a vertical polarization component and the third polarization component is a horizontal polarization component. More specifically, the first polarization component (the vertical polarization component) and the third polarization component (the horizontal polarization component) are perpendicular to each other, and the first polarization component (the vertical polarization component) and the second polarization component (the vertical polarization component) are parallel to each other.

The structure of the reflection polarizing plate 10c is described below. FIG. 3 is a perspective view showing the structure of the reflection polarizing plate 10e shown in FIG.2. The reflection polarizing plate 10c is formed of a multilayer optical film structure made of resin layers 10C1, 10C2, 10C3,···,10Cn-3, 10Cn-2, 10Cn-1 and 10Cn. The reflection polarizing plate 10c produces a linearly polarized light by using multistage reflection (through resin layers 10C1 to 1OCn), using the characteristic of resin layers that light reflected by a reflection surface of resin layers at an angle is partly polarized.

In this embodiment, the polarizing plate 10a and the reflection polarizing plate 10c are formed of resin layers having refractive index anisotropy. The resin layers having the refractive index anisotropy are formed of materials such as a polyvinyl alcohol iodine system. For example, polyvinyl alcohol is stretched in any direction and then the polyvinyl alcohol molecules are aligned such that a helix structure of the polyvinyl alcohol molecules faces toward any direction so that the refractive index anisotropy is generated. The polyvinyl alcohol is then soaked in iodine solution so that iodine is absorbed in the helix structure. Thus, the resin layers having the refractive index anisotropy and a polarization performance are formed. Furthermore, it is preferable that the resin layers are sandwiched by cellulosic plastic films to increase their durability and the mechanical strength.

The polarizing plate 10a and the reflection polarizing plate 10c makes it possible to separate an ordinary ray from an extraordinary ray whose traveling direction is different from that of the ordinary ray by means of the refractive index anisotropy, whereby only the ordinary ray can be emitted toward eyes of a driver as reflected fight. More specifically, even if the transmitted light emitted from the liquid crystal cell 10b includes an extraordinary ray generated by disordered behavior of the liquid crystal molecules, it is possible to exclude the extraordinary ray and to emit only an ordinary ray as reflected light.

Referring back to FIG.2, the optical absorption member 10d is described below. The optical absorption member 10d is formed of membranes or films coated in black, Because the transmitted light ejected from the reflection polarizing plate 10c is the vertical polarization component (the second polarization component), a light polarizer which absorbs the vertical polarization component may be used as the optical absorption member 10d.

An operation of the liquid crystal glares roof mirror 100 in a non-glare-proof mode and an operation thereof in a glare-proof mode are explained below. The subscript "⊥" is assigned to the vertical polarization component and the subscript "=" is assigned to the horizontal polarization component hereinafter for the convenience of the explanation.

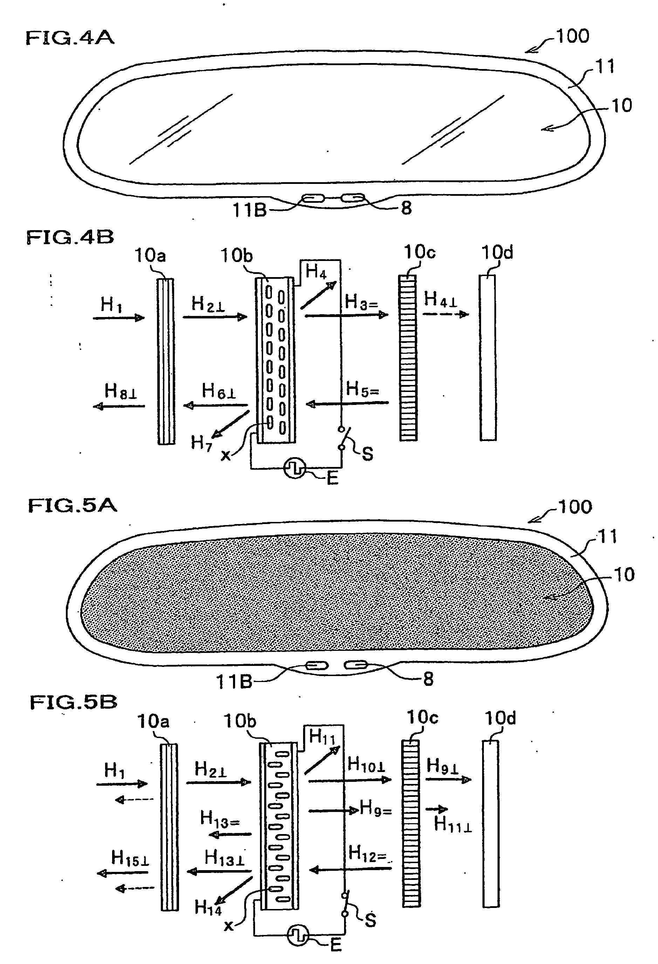

The operation of the liquid crystal glare-proof mirror 100 in the non-glare-proof mode is described. FIG- 4A is a front view of the liquid crystal in the non-glare-proof mode. FIG. 4B is a schematic view showing a light passing through the mirror body when the liquid crystal glare-proof mirror is in the non-glare-proof mode.

In the liquid crystal glare-proof mirror 100 shown in FIG. 4A, substantially all vertical polarization component of incident light is reflected from the front surface of the mirror body 10 which is surrounded by the ring 11. In this case, because a switch S is switched off as shown in FIG. 4B, alternating voltage from a power supply E is not applied to the liquid crystal cell 10b. When the switch S is off, liquid crystal molecules x are aligned in a vertical direction in FIG. 4B (horizontal to the direction of the electrodes) and arranged in a helical structure in the horizontal direction of FIG. 4B (vertical to the direction of the electrodes), and thus the liquid crystal cell 10b, which is a TN liquid crystal, has an optical rotatory power. The direction of electrodes is the direction of the glass substrates 10E and 10F in which the transparent electrodes are wired (refer to FIG.2) (this is true through the entire specification)

When a light H1 (natural light (especially back light)) enters the polarizing plate 10a, the polarizing plate 10a transmits the vertical polarization component (also referred to as the "first polarization component") and ejects a light H2⊥ as shown in FIG. 4B. The light H2⊥ then enters the liquid crystal cell 10b and is rotated in substantially 90 degree by the optical rotatory power of the liquid crystal cell 10b and then emitted as a light (ordinary ray) H3=, which is the horizontal polarization component (also referred to as the "third polarization component"), When the behavior of the liquid crystal molecules x in the liquid crystal cell 10b are disordered, an extraordinary ray H4 is ejected together with the light H3 =. Although the light H4 is generally the same horizontal polarization component as the light H3 = because the light H4 is a light whose traveling direction is changed from that of the light H3, the light H4 is assumed to include the vertical polarization component which has not been rotated for the convenience of the explanation.

The light H3 = ejected from the liquid crystal cell 10b enters the reflection polarizing plate 10e and is reflected as a light H5= because the light H3= is the horizontal polarization component (the third polarization component). The light H5= then enters the liquid crystal cell 10b and is rotated by the liquid crystal cell 10b. The light H5= is then ejected from the liquid crystal cell 10b as a light H6⊥, which is the vertical polarization component, and the light H6⊥ is then ejected from the polarizing plate 10a as a light H8⊥. When the behavior of the liquid crystal molecules x in the liquid crystal cell 10b are unstable, an extraordinary ray H7 is ejected together with the light H6⊥. Although the light H7 is generally the same vertical polarization component as the light H6⊥ because the light H7 is a light whose traveling direction is changed from that of the light H6⊥, the light H7 is assumed to include the horizontal polarization component which has not been rotated for the convenience of the explanation.

At the reflection, polarizing plate 10c, the light H4=, which is the horizontal polarization component of the light H4, is significantly bent to be separated from the traveling direction of the light H5=, The light H4⊥, which is the horizontal polarization component of the light H4, transmits through the reflection polarizing plate 10c and is absorbed by the optical absorption member 10d. The light H7⊥, which is the vertical polarization component of the light H7 is significantly bent at the polarizing plate 10a. to be separated from the traveling direction of the light H6⊥. The light H7=, which is the horizontal polarization component of the light H7is absorbed by the polarizing plate 10a and then is radiated as heat.

Thus, when the liquid crystal glare-proof mirror 100 is in the non-glare-proof mode, it is possible to remove an extraordinary ray by the polarizing plate 10a and the reflection polarizing plate 10c and to emit only an ordinary ray as reflected light even when the extraordinary ray is generated in the liquid crystal cell 10b, whereby the liquid crystal glare-proof mirror 100 is less affected by the extraordinary ray generated in the liquid crystal cell 10b.

Next, the operation of the liquid crystal glare-proof mirror 100 in the glare-proof mode is described. FIG. 5A is a front view of the liquid crystal glare proof mirror in the glare-proof mode. FIG. 5B is a schematic view showing a light passing through the mirror body when the liquid crystal glare-proof mirror 100 is in the glare-proof mode. In the glare-proof mode, because voltage is applied to the liquid crystal cell 10b, even if extraordinary rays are generated in the liquid crystal cell 10b, the extraordinary rays will be diminished immediately, however the operation of the liquid crystal glare-proof mirror in a case where there are extraordinary rays is described below.

In the liquid crystal cell 10b, the liquid crystal molecules x are aligned in the horizontal direction of FIG. 5B. The voltage value applied to the liquid crystal cell 10b is determined based on the relationship between the amount of surrounding light and that of back light, and the rotation of the polarization of the incident light is partly reduced based on the voltage value. More specifically, the liquid crystal cell 10b ejects both of the vertical polarization component and the horizontal polarization component. Because the amount of polarized light to be transmitted is controlled by comparing the amount of the surrounding light and that of the back light, it is possible to control the amount of light which is reflected from the second polarizing plate 10c, transmitted through the liquid crystal cell 10b and then ejected from the polarizing plate 10a.

Although, in the embodiment, the voltage value applied to the liquid crystal cell 10b is controlled based on the amount of surrounding light and that of back light, a voltage value large enough to align all of the liquid crystal molecules x substantially vertical to the electrodes may always be applied to the liquid crystal cell 10b in the glare-proof mode. In the liquid crystal glare-proof mirror 100, a driver can catch back light even if all incident light is controlled to be absorbed in optical absorption member 10d because practically the back light is reflected by the surface of the polarizing plate 10a and a protective coat (not shown) covering the surface of the polarizing plate 10a. The voltage value may be changed in stages based on the amount of the back light to gradually reduce glare.

In the liquid crystal glare-proof mirror 100 shown in FIG. 5A, a part of the vertical polarization component of incident light is reflected by the front surface of the mirror body 10 which is surrounded by the ring 11. In this case, the switch S is switched on, and thus alternating voltage from the power supply E is applied to the liquid crystal cell 10b as shown in FIG. 5B. When alternating voltage is applied to the liquid crystal cell 10b, because the liquid crystal cell 10b is TN liquid crystal, a part of the liquid crystal molecules x are aligned in the vertical direction of FIG. 5B and are arranged in a helix structure in the horizontal direction, whereby the optical rotatory power of the liquid crystal cell 10b is reduced.

When a light H1 (natural light (especially back light)) enters the polarizing plate 10a, the polarizing plate 10a transmits the vertical polarization component (the first polarization component) and ejects a light H2⊥ as shown in FIG. 5B. The light H2⊥ then enters the liquid crystal cell 10b and a part of the light H2⊥ is rotated in substantially 90 degree by the optical rotatory power of the liquid crystal cell 10b and ejected as a light (ordinary ray) H9=, which is the horizontal polarization component (the third polarization component), and the other part of the light H2⊥ is ejected as a light H10⊥, which is the vertical polarization component (the second polarization component). When the behavior of the liquid crystal molecules x in the liquid crystal cell 10b are disordered, an extraordinary ray H4 is ejected together with the light H9 =. Because the light H11 is a light whose traveling direction is changed from that of the light H9, the light H11 is generally the same horizontal polarization component as the light H9=, however, the vertical polarization component which has not been rotated is also assumed to be included in the light H11 for the convenience of the explanation.

The light H9= ejected from the liquid crystal cell 10b enters the reflection polarizing plate 10c and is reflected as a light H12= because the light H9= is the horizontal polarization component (the third polarization component). The light H12 = then enters the liquid crystal cell 10b and a part of the light H12= is rotated by the liquid crystal cell 10b and ejected from the liquid crystal cell 10b as a light H13⊥, which is the vertical polarization component, and the other part of the light H12= is not rotated and ejected as a light H13=, which is the horizontal polarization component. Both of the light H13⊥ and the light H13 = enter the polarizing plate 10a, but only the light H13⊥ is transmitted and ejected as a light H15⊥. When the behavior of the liquid crystal molecules x in the liquid crystal cell 10b are disordered, a light extraordinary ray H14 is ejected together with the light H13⊥ and the light H13=. The light H14 is generally the vertical polarization component which is the same as the polarization component of the light H13⊥ because the light H14 is a light whose traveling direction is changed from that of the light H13⊥, however, the light H11 is also assumed to include the vertical polarization component which has not been rotated for the convenience of the explanation.

The light H11=, which is the horizontal polarization component of the light H11, is significantly bent at the reflection polarizing plate 10c to be separated from the traveling direction of the light H12 =. The light H11⊥, which is the vertical polarization component of the light H11 passes through the reflection polarizing plate 10c together with the light H9⊥. The light H11⊥ and the light H9⊥ are absorbed in the optical absorption member 10d. The light H14⊥, which is the vertical polarization component of the light H14, is significantly bent at the polarizing plate 10a to be separated from the traveling direction of the light H13⊥. The light H14=, which is the horizontal polarization component of the light H14, and a light H13= are absorbed in the polarizing plate 10a and radiated as heat.

As described above, when the liquid crystal glare-proof mirror 100 is in the glare-proof mode, it is possible to remove an extraordinary ray by the polarizing plate 10a and the reflection polarizing plate 10c and to eject only an ordinary ray as reflected light even when an extraordinary ray is generated in the liquid crystal cell 10b, whereby the liquid crystal glare-proof mirror 100 is less affected by an extraordinary ray generated in the liquid crystal cell 10b.

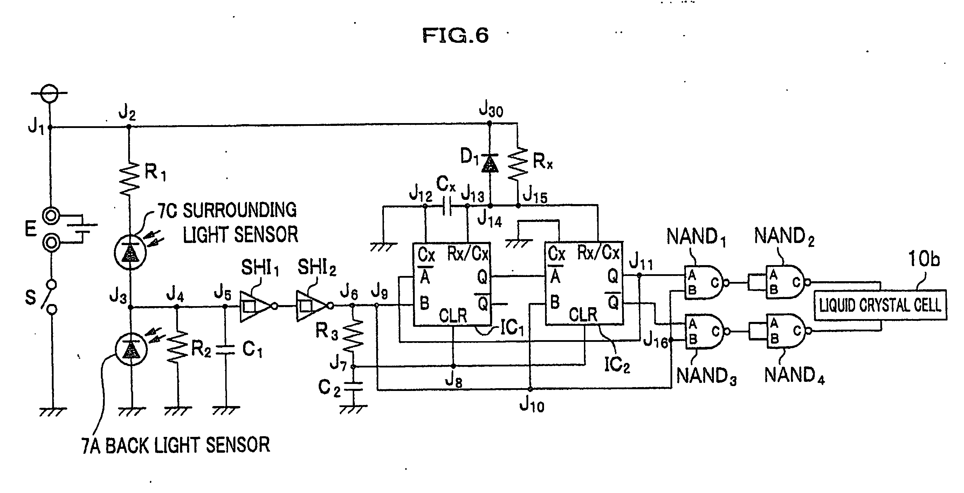

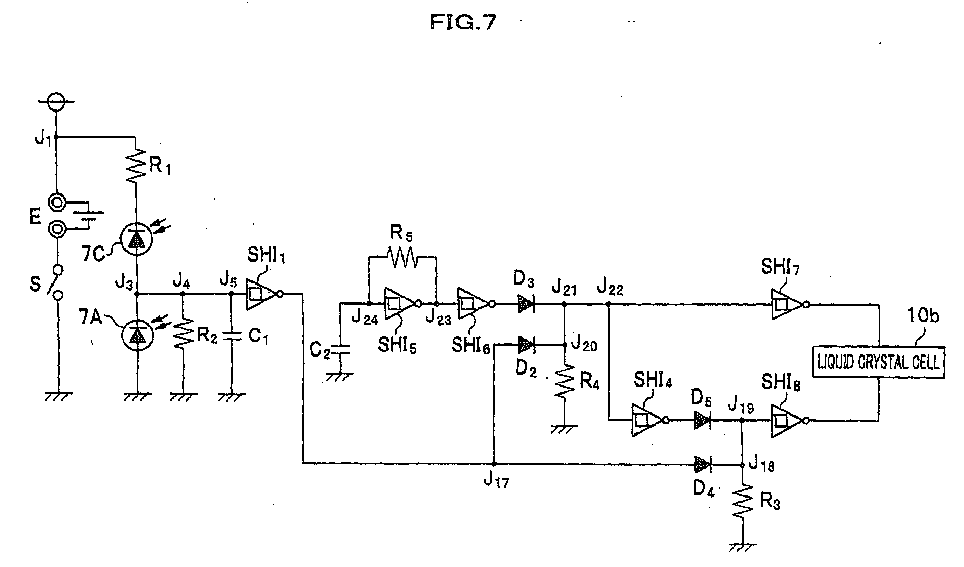

Examples 1 and of a liquid crystal cell control circuit (means) for controlling the liquid crystal cell 10b are explained hereinafter. FIG. 6 is a circuit diagram illustrating the example 1 of the liquid crystal cell control circuit. FIG. 7 is a circuit diagram illustrating the example 2 of the liquid crystal cell control circuit. The liquid crystal cell control circuit is formed on the plate circuit 7 shown in FIG. 1A.

### <EXAMPLE 1>

A switch S of which end is grounded is connected to a direct current power supply E in series, and the positive electrode of the power supply E is connected to a resistance R1 via a branch point J1 and J2 as shown in FIG. 6. The surrounding sensor 7C and the back light sensor 7A are connected to the resistance R1 in series. The other end of the back light sensor 7A is grounded. A schmitt inverter circuit (hereinafter referred to as a "circuit SHI") SHI1 is connected to a branch point J3 between the surrounding light sensor 7C and the backward light sensor 7A. The surrounding light sensor 7C and the backward light sensor 7A are photodiodes whose output voltage increases as received light volume is increased.

A resistance R2 of which an end is grounded is connected via a branch point J4 to the branch point J3 and an input terminal of the circuit SHI1. A capacitor C1 of which an end is grounded is connected via a branch point J5 to the branch point J4 and the input terminal of the circuit SHI1. The resistance R2 and the capacitor C1 functions as a delay circuit (means) for delaying a signal generated by voltage change at the branch point J3 to be input to the input terminal of the circuit SHI1. An output terminal of the circuit SHI1 is connected to an input terminal of a circuit SHI2.

The circuit SHI1 has hysteresis characteristics, and thus the operation condition of the circuit SHI1 is not changed by voltage change within a range set in advance. The negative logic at the circuit SHI1 returns to the positive logic at the circuit SHI2, and voltage change is absorbed by the circuit SHI1 and SHI2 having the hysteresis characteristics.

The output terminal of the circuit SHI2 is connected to an input terminal B of a digital IC1. The digital IC1 and a digital IC2 function as an oscillating circuit (means). Each of the digital IC1 and the digital IC2 includes an input terminal A (negative logic) (although a symbol "-" is assigned at the top of the reference symbol A in FIG. 8, the symbol "-" is omitted in the specification), an input terminal B, an output terminal Q (positive logic), an output terminal Q (negative logic) (similarly, the symbol "-" is omitted in the specification), a CLR terminal, a Cx terminal and an Terminal Rx/Cx.

Connected to the branch point J6 between an output terminal of a circuit SHI 2 and the input terminal B of the digital IC 1 is a resistance R3. A capacitor C2 of which end is grounded is connected to a branch point J7 which is connected to the other end of the resistance R3. The branch point J7 is also connected to a branch point J8, and the branch point J8 is further connected to each CLR terminal of the digital IC1 and the digital IC 2. The resistance R3 and the capacitor C2 delays a signal being input to the CLR terminal.

The input terminal B of the digital IC2 is connected via a branch point J10 to a branch point J9 between the output terminal of the circuit SHI2 and the input terminal B of the digital IC1. Thus, the same output from the circuit SHI2 is input to each input terminal B in the digital IC1 and the digital IC2.

An output terminal Q (positive logic) of the digital IC1 is connected to the input terminal A (negative logic) of the digital IC2. The output terminal Q (negative logic) of the digital IC1 is opened- An output terminal Q (positive logic) of the digital IC2 is connected via a branch point J11 to the input terminal A(negative logic) of the digital ICI. Thus, when the input terminals B of the digital ICI and the digital IC2 are high if the output terminal Q (positive logic) of the digital IC2 is low, the output terminal Q (negative logic) of the digital IC2 becomes low, making the output terminal Q (positive logic) of the digital IC1 high and the output terminal Q (negative logic) which is opened low. When the output terminal Q (positive logic) of the digital 101 becomes low according to the duty ratio set based on the time constant set by the terminals Rx/Cx, the input terminal A (negative logic) of the digital IC2 becomes low. Then, the output terminal Q (positive logic) of the digital IC2 becomes high and the output terminal Q (negative logic) becomes low. By repeating the above operation, when the input terminal B is high, the digital IC1 and the digital IC2 function as an oscillating circuit (means) .

An end of the terminal Cx of the digital IC1 is connected to a branch point J12 between an earth and a capacitor Cx. The other end of the capacitor Cx is connected via a branch point J13 to the terminal Rx/Cx of the digital IC1. The terminal Rx/Cx of the digital IC2 is connected via branch points J14 and J15 to the branch point J13. The terminal Cx of the digital IC2 is grounded. Connected to the branch point J14 is a diode D1 of which negative terminal is disposed at the branch point J14 side. A resistance Rx is also connected to the branch point J15,

A positive electrode of the diode D1 and the other end of the resistance Rx are connected to a branch point J30 and further connected to the positive electrode of the power supply E via the branch point J2. Therefore, when the switch S is switched on, the capacitor Cx is charged via the resistance Rx. When the switch S is switched off, the capacitor Cx starts to discharge electricity to raise the electrical potential of the terminal Cx of the digital IC1. Thus, the capacitor Cx functions as a delay circuit (means), preventing the digital IC1 front being turned off abruptly. When the switch S is switched on, the digital IC1 and the digital I C2 are supplied with electricity from the terminals Rx/Cx.

An input terminal A of a logical circuit NAND1is connected to a branch point J11. An output terminal C of the logical circuit NAND1is connected to input terminals A and B of the logical circuit NAND2. An output terminal C of the logical circuit NAND2 is connected to a terminal of the area AR2 on one side of the area AR2. An input terminal B of the logical circuit NAND land an input terminal B of the logical circuit NAND3 are connected to a branch point J16.

An input terminal A of the logical circuit NAND3 is connected to the output terminal Q (negative logic) of the digital IC2. An output terminal C of the logical circuit NAND3 is connected to input terminals A and B of the logical circuit NAND4. An output terminal C of the logical circuit NAND4 is connected to a terminal of the AR2 on the other side of the area AR2.

Thus, both of the output terminals C of the logical circuit NAND2 and the logical circuit NAND4 have to be low in order not to apply voltage to the liquid crystal cell 10b. On the other hand, when either one of the output terminals C of the logical circuit NAND 2 and the logical circuit NAND 4 is high and the other one of the output terminals C is low, voltage is applied to the area AR2 of the liquid crystal cell 10b.

In the circuit of example 1 described as above, on/off of the liquid crystal cell 10b is controlled based on the voltage value of the branch point J3 between the surrounding light sensor 7C and the backward light sensor 7A. Operations of the circuit in the non-glare-proof mode and the glare-proof mode are respectively described below,

The operation of the liquid crystal glare-proof mirror when back light comes into the liquid crystal glare-proof mirror while surrounding light is strong is described below. In this case, a driver is not dazzled because the back light is made less glaring by the surrounding light. Thus, the liquid crystal glare-proof mirror is controlled to be the non-glare-proof mode. In this case, even if the received light volume of the backward light sensor 7A is large, because the received light volume of the surrounding light sensor 7C is also large and the output voltage of the surrounding light sensor 7C is large, the voltage value of the branch point J3 does not become large, and thus the input terminal of the circuit SHI1 becomes low. At this time, the output of the circuit SHI1 is high and the output of the circuit SHI2 is low. Thus, each input terminal B and each CLR terminal in the digital IC1 and digital IC2 are low. Each input terminal B in the logical circuit NAND1 and the logical circuit NAND3 is low and thus each output terminal C in the logical circuit NAND1 and the logical circuit NAND3 is high. Therefore, each output terminal C in the logical circuit NAND2 and the logical circuit NAND4 becomes low. Thus, voltage is not applied to the area AR1, and the area AR1 in the liquid crystal glare-proof mirror100 is not glare-proofed.

When back light comes into the liquid crystal glare-proof mirror while surrounding light is weak, the liquid crystal glare-proof mirror is controlled to be in the glare-proof mode because the back light is emphasized too much and a driver is dazzled. To be more specific, the voltage value of the branch point J3 becomes large in this case because the received light volume of the surrounding light sensor 7C is small, the output voltage thereof is also small, the received light volume of the backward light sensor 7A is large and the output voltage thereof is also large. Therefore, the input terminal of the circuit SHI1 becomes high, making the output voltage of the circuit SHI2 high. Then each input terminal B in the logical circuit NAND1 and the logical circuit NAND3 becomes high. Each input terminal of the digital IC1 and the digital IC2 is also high, and thus the digital IC1 and the digital IC2 starts to function as an oscillating circuit. Thus, the logical circuit NAND1and the logical circuit NAND 3 repeats an on-off operation according to the output of the digital IC2, causing the logical circuit NAND 2 and the logical circuit NAND 4 to perform an on-off operation corresponding to the on-off operation of the logical circuit NAND1and the logical circuit NAND 3. Thus, alternating voltage is applied to the liquid crystal cell 10b, and the liquid crystal glare-proof mirror 100 is in the glare-proof mode.

### <EXAMPLE2>

Similarly to the example 1, in the example 2 a switch S of which an end is grounded is connected to a direct current power supply E in series, and the positive electrode of the power supply E is connected to a resistance R1 via a branch point J1 and J2 as shown in FIG. 7. The surrounding sensor 7C and the back light sensor 7A are connected to the resistance R1 in series. The other end of the backward light sensor 7A is grounded. The schmitt inverter circuit SHI 1 is connected to the branch point J3 between the surrounding light sensor 7C and the backward light sensor 7A.

A resistance R2 of which an end is grounded is connected via a branch point J4 to the branch point J3 and an input terminal of the circuit SHI1. A capacitor C1 of which an end is grounded is connected via a branch point J5 to the branch point J4 and the input terminal of the circuit SHI1. The resistance R2 and the capacitor C1 functions as a delay circuit (means) for delaying a signal generated by voltage change at the branch point J3 to be input to the input terminal of the circuit SHI1.

The anode of a diode D4 and the anode of a diode D2 are connected to the output terminal of the circuit SHI 1 via a branch point J17. The resistance R3 of which an end is grounded is connected via a branch point J18 to the cathode of the diode D4. Connected to the branch point J18 via a branch point J 19 is an input terminal of a circuit SHI 8. An output terminal of the circuit SHI 8 is connected to a terminal of the liquid crystal cell 10b on one side thereof.

A resistance R4 of which an end is grounded is connected to the cathode of the diode D2 via a branch point J20. Connected to the branch point J20 via a branch point J21 is an input terminal of a circuit SHI 7. An output terminal of the circuit SHI7 is connected to a terminal of the area AR2 of the liquid crystal cell 10b on the other side of the area AR2. Therefore, when voltage is not applied to the liquid crystal cell 10b, both output terminals of the circuit SHI7 and the circuit SHI8 are low, whereas when voltage is applied to the liquid crystal cell 10b, each output terminal of the circuit SHI7 and the circuit SHI8 outputs high and low alternately.

An input terminal of the circuit SHI4 is connected to a branch point J22 between the branch point J21 and the circuit SHI7, and an output terminal of the circuit SHI4 is connected to the branch point J19 via a diode D5. Connected to the branch point J21 is the cathode of a diode D3, and the anode of the diode D3 is connected to an output terminal of the circuit SHI6. Connected to an input terminal of the circuit SHI6 via a branch point J23 are an output terminal of the circuit SHI5 and a resistance R5. The resistance R5 is also connected to an input terminal of the circuit SHI5 via a branch point J24, and the input terminal of the circuit SHI5 is connected via the branch point J24 to a capacitor C2 of which an end is grounded.

In the circuit described above, when the liquid crystal glare proof mirror is in the non-glare-proof mode (i.e. when the branch point J3 is low), the output terminal of the circuit SHI1 becomes high, making the diode D2 conduct and its potential on the branch point J21 side high. Thus, reverse voltage is applied to the diode D3, making the potential of the output terminal of the circuit SHI6 low, and thus the potential of the branch point J23 becomes high. The capacitor C2, the circuit SHI5 and the resistance R5 constitutes an astable multivibrator (oscillating circuit (means)). Thus, when the branch point J23 is high, the capacitor C2 is charged through the resistance R5. It is to be noted that the capacitor C2 remains saturated with the branch point J23 kept being high because a trigger voltage of the circuit SHI5 is not exceeded when reverse voltage is applied to the diode D3.

At this time, the input terminal of the circuit SHI8 is high and the output terminal of the circuit SHI8 is low because the diode D4 is conducted in a forward direction. The input terminal of the circuit SHI7 is high and the output terminal of the circuit SHI7 is low because the diode D2 is conducted. Thus, voltage is not applied to the liquid crystal cell 10b, and the liquid crystal glare proof mirror 100 is in the non-glare-proof mode- Forward voltage is applied to the diode D5 because the input terminal of the circuit SHI4 is high, the output terminal of the circuit SHI4 is low and the branch point J19 is high.

When the non-glare-proof mode is switched to the glare-proof mode (i.e. the branch point J3 becomes high), the output terminal (branch point J51) of the circuit SHI1 becomes low, and thus reverse voltage is applied to the diode D2, causing the potential of the diode D2 on the branch point J21 side to be low through the resistance R4. On the other hand, the low voltage applied to the output terminal of the circuit SHI6 is reduced by the reverse voltage applied to the diode D3, and the capacitor C2 begins to discharge based on a balance between a trigger voltage of the circuit SHI6 and a trigger voltage of the circuit SHI5, causing the capacitor C2 and the circuit SHI5 and the resistanceR5 to start oscillation. The oscillation is transmitted to the branch point J22 via the diode D3, and thus the output terminal of the circuit SHI7 repeats inversion of high and low, and the circuit SHI4 and the circuit SHI8 synchronizes with the circuit SHI7 to repeat inversion of high and low which is reversed from the inversion at the circuit SHI 7. Thus, voltage is applied to the liquid crystal cell 10b, making the liquid crystal glare-proof mirror 100 be in the glare-proof made.

### <Modification1>

In the above embodiments, the liquid crystal glare-proof mirror 100 includes both of the surrounding light sensor 7C and the backward light sensor 7A, however, the liquid crystal glare-proof mirror 100 may include at least one of them.

### <Modification 2>

In the above embodiments, the liquid crystal glare-proof mirror 100 includes the TN liquid crystal as a light transmission shutter, however the liquid crystal glare-proof mirror 100 may include any other components as a light transmission shutter as long as the components have a shutter function without limited to the TN liquid crystal.

### <Modification 3>

In the above embodiments, the liquid crystal is used as a light transmission shutter, however, Faraday rotator using a so-called Faraday effect that exhibits a polarization rotatory power when given a magnetic field may be used as a shutter element.

The embodiments according to the present invention have been explained as aforementioned.

## Claims

1. A liquid crystal glare-proof mirror (100) comprising:
a first polarizing means for transmitting a first polarization component of incident light;
a second polarizing means for transmitting a second polarization component of the incident light; and
a liquid crystal cell (10b) disposed between the first polarizing means and the second polarizing means,
the first polarizing means is a polarizing plate (10a),
**characterized in that**
the second polarizing means is a reflecting polarizing plate (10c) and
at least either one of the first polarizing plate (10a) and the second polarizing plate (10c) being formed of material having refractive index anisotropy exhibiting a different refraction of the incident light that varies depending on an angle at which the incident light comes into the either one of the first polarizing plate (10a) and the second polarizing plate (10c).

2. The liquid crystal glare-proof mirror according to claim 1, wherein
the second polarizing plate reflects a third polarization component perpendicular to the second polarizing component,
liquid crystal molecules in the liquid crystal cell (10b) are aligned in such a manner that the liquid crystal cell (10b) exhibits polarization rotatory power on the incident light when voltage is not applied to the liquid crystal molecules and the liquid crystal cell (10b) does not exhibit the polarization rotatory power on the incident light when voltage is applied to the liquid crystal molecules, and
the first polarizing plate (10a) and the second polarizing plate (10c) are disposed in such a manner that the first polarization component is perpendicular to the third polarization component and the first polarization component is parallel to the second polarization component.

3. The liquid crystal glare-proof mirror according to claim 1 or 2, wherein an optical absorption member for absorbing the second polarization component transmitter through the second polarizing plate is disposed opposite to the side of the second polarizing plate on which the liquid crystal cell is disposed.

4. The liquid crystal glare-proof mirror according to anyone of the claims 1 to 3, further comprising:
a surrounding light detection device (7C) for detecting a quantity of light around a vehicle;
a back light detection device (7A) for detecting a quantity of light coming from a rear side of the vehicle;
a liquid crystal cell control device for
comparing the quantity of light around the vehicle detected by the surrounding light detection device (7C) and the quantity of light coming from the rear side of the vehicle detected by the back light detection device (7A),
controlling the liquid crystal glare-proof mirror (100) to be glare-proofed when the quantity of the light coming from the rear side of the vehicle is greater than the quantity of light around the vehicle at not less than a predetermined value, and
controlling the liquid crystal glare-proof mirror (100) not to be glare-proofed when the quantity of the light coming from the rear side of the vehicle is smaller than or equal to the quantity of the light around the vehicle, or when the quantity of light coming from the rear side of the vehicle is greater than the quantity of the light around the vehicle in less than the predetermined value.

5. The liquid crystal glare-proof mirror according to claim 4, further comprising a delay unit for delaying a timing at which a detection signal output from the surrounding light detection device (7C) and a detection signal output from the back light detection device (7A) are input to the liquid crystal cell control device.

6. The liquid crystal glare-proof mirror according to claim 4 or 5, wherein the liquid crystal cell control device comprises an oscillation unit for oscillating a control signal which controls the liquid crystal cell.

## Patentansprüche

1. Blendfreier Flüssigkristallspiegel (100) mit:
einer ersten Polarisationseinrichtung zum Übertragen einer ersten Polarisationskomponente einfallenden Lichts;
einer zweiten Polarisationseinrichtung zum Übertragen einer zweiten Polarisationskomponente des einfallenden Lichts; und
einer Flüssigkristallzelle (10b), die zwischen der ersten Polarisationseinrichtung und der zweiten Polarisationseinrichtung angeordnet ist,
wobei die erste Polarisationseinrichtung eine Polarisationsplatte (10a) ist,
**dadurch gekennzeichnet, dass**
die zweite Polarisationseinrichtung eine reflektierende Polarisationsplatte (10c) ist, und
zumindest die erste Polarisationsplatte (10a) und/oder die zweite Polarisationsplatte (10c) aus einem Material mit einer Brechungsindexanisotropie bestehen, die eine unterschiedliche Brechung des Einfallslichts bewirkt, welche je nach dem Winkel, unter dem das einfallende Licht in die erste Polarisationsplatte (10a) beziehungsweise die zweite Polarisationsplatte (10c) einfällt, variiert.

2. Blendfreier Flüssigkristallspiegel nach Anspruch 1, bei welchem: die zweite Polarisationsplatte eine dritte Polarisationskomponente senkrecht zu der zweiten Polarisationskomponente reflektiert,
Flüssigkristallmoleküle in der Flüssigkristallzelle (10b) derart ausgerichtet sind, dass die Flüssigkristallzelle (10b) die Fähigkeit zur Polarisationsdrehung des einfallenden Lichtes aufweist, wenn keine Spannung an die Flüssigkristallmodule angelegt ist, und dass die Flüssigkristallzelle (10b) die Fähigkeit zur Polarisationsdrehung des einfallenden Lichts nicht aufweist, wenn an den Flüssigkristallmodulen Spannung anliegt, und
die erste Polarisationsplatte (10a) und die zweite Polarisationsplatte (10c) derart angeordnet sind, dass die erste Polarisationskomponente senkrecht zu der zweiten Polarisationskomponente verläuft und die erste Polarisationskomponente parallel zu der zweiten Polarisationskomponente verläuft.

3. Blendfreier Flüssigkristallspiegel nach Anspruch 1 oder 2, bei welchem ein optisches Absorptionselement zum Absorbieren der durch die zweite Polarisationsplatte transmittierten zweiten Polarisationskomponente gegenüber der Seite der zweiten Polarisationsplatte angeordnet ist, auf welcher die Flüssigkristallzelle angeordnet ist.

4. Blendfreier Flüssigkristallspiegel nach einem der Ansprüche 1 bis 3, ferner mit:
einer Umgebungslichterkennungsvorrichtung (7C) zum Erkennen der Lichtmenge um ein Fahrzeug herum;
einer Hinterlichterkennungsvorrichtung (7A) zum Erkennen einer von der Rückseite des Fahrzeugs her kommenden Lichtmenge;
einer Flüssigkristallzellensteuervorrichtung zum
Vergleichen der um das Fahrzeug existierenden Lichtmenge, die von der Umgebungslichterkennungsvorrichtung (7C) erkannt wurde, mit der von der Rückseite des Fahrzeugs kommenden Lichtmenge, die von der Hinterlichterkennungsvorrichtung (7A) erkannt wurde,
Steuern des blendfreien Flüssigkristallspiegels (100) in einen blendfreien Zustand, wenn die von der Rückseite des Fahrzeugs kommende Lichtmenge größer als die um das Fahrzeug existierende Lichtmenge ist, jedoch nicht geringer als ein vorbestimmter Wert ist, und
Steuern des blendfreien Flüssigkristallspiegels (100) in einen nicht blendfreien Zustand, wenn die von der Rückseite des Fahrzeugs kommende Lichtmenge kleiner als oder gleich der um das Fahrzeug existierenden Lichtmenge ist, oder wenn die von der Rückseite des Fahrzeugs kommende Lichtmenge um weniger als den vorbestimmten Wert größer als die um das Fahrzeug existierende Lichtmenge ist.

5. Blendfreier Flüssigkristallspiegel nach Anspruch 4, ferner mit einer Verzögerungseinheit zum Verzögern des Zeitpunkts, zu dem ein Erkennungsausgangssignal der Umgebungslichterkennungsvorrichtung (7C) und ein Erkennungsausgangssignal der Hinterlichterkennungsvorrichtung (7A) in die Flüssigkristallzellensteuervorrichtung eingegeben werden.

6. Blendfreier Flüssigkristallspiegel nach Anspruch 4 oder 5, bei welchem die Flüssigkristallzellensteuervorrichtung eine Oszillationseinheit zum Oszillieren eines die Flüssigkristallzelle steuernden Steuersignals aufweist.

## Revendications

1. Miroir antireflet à cristaux liquides (100) comprenant :
un premier moyen de polarisation pour transmettre une première composante de polarisation de lumière incidente ;
un deuxième moyen de polarisation pour transmettre une deuxième composante de polarisation de la lumière incidente ; et
une cellule de cristaux liquides (10b) disposée entre le premier moyen de polarisation et le deuxième moyen de polarisation,
le premier moyen de polarisation étant une plaque de polarisation (10a),
**caractérisé en ce que**
le deuxième moyen de polarisation est une plaque de polarisation réfléchissante (10c) et
au moins l'une parmi la première plaque de polarisation (10a) et la deuxième plaque de polarisation (10c) étant formée d'une matière ayant une anisotropie d'indice de réfraction présentant une réfraction différente de la lumière incidente qui varie en fonction d'un angle avec lequel la lumière incidente pénètre dans l'une parmi la première plaque de polarisation (10a) et la deuxième place de polarisation (10c).

2. Miroir antireflet à cristaux liquides selon la revendication 1, dans lequel
la deuxième plaque de polarisation reflète une troisième composante de polarisation perpendiculaire à la deuxième composante de polarisation,
les molécules de cristaux liquides dans la cellule de cristaux liquides (10b) sont alignées de telle sorte que la cellule de cristaux liquides (10b) présente un pouvoir rotatoire de polarisation sur la lumière incidente lorsqu'une tension n'est pas appliquée aux molécules de cristaux liquides et la cellule de cristaux liquides (10b) ne présente pas de pouvoir rotatoire de polarisation sur la lumière incidente lorsqu'une tension est appliquée aux molécules de cristaux liquides, et
la première plaque de polarisation (10a) et la deuxième plaque de polarisation (10c) sont disposées de telle sorte que la première composante de polarisation est perpendiculaire à la troisième composante de polarisation et la première composante de polarisation est parallèle à la deuxième composante de polarisation.

3. Miroir antireflet à cristaux liquides selon la revendication 1 ou 2, dans lequel un élément d'absorption optique destiné à absorber la deuxième composante de polarisation transmise à travers la deuxième plaque de polarisation est disposé à l'opposé du côté de la deuxième plaque de polarisation sur lequel la cellule de cristaux liquides est disposée.

4. Miroir antireflet à cristaux liquides selon l'une quelconque des revendications 1 à 3, comprenant en outre :
un dispositif de détection de lumière environnante (7C) destiné à détecter une quantité de lumière autour d'un véhicule ;
un dispositif de détection de lumière arrière (7A) destiné à détecter une quantité de lumière provenant d'un côté arrière du véhicule ;
un dispositif de commande de cellule à cristaux liquides destinés à
comparer la quantité de lumière autour du véhicule détectée par le dispositif de détection de lumière environnante (7C) et la quantité de lumière provenant du côté arrière du véhicule détectée par le dispositif de détection de lumière arrière (7A),
commander le miroir antireflet à cristaux liquides (100) pour être antireflet lorsque la quantité de lumière provenant du côté arrière du véhicule est supérieure à la quantité de lumière environnant le véhicule d'une valeur qui n'est pas inférieure à une valeur prédéterminée, et
commander le miroir antireflet à cristaux liquides (100) pour ne pas être antireflet lorsque la quantité de lumière provenant du côté arrière du véhicule est inférieure ou égale à la quantité de lumière autour du véhicule ou lorsque la quantité de lumière provenant du côté arrière du véhicule est supérieure à la quantité de lumière autour du véhicule d'une valeur qui est inférieure à la valeur prédéterminée.

5. Miroir antireflet à cristaux liquides selon la revendication 4, comprenant en outre une unité à retard destinée à retarder un instant auquel un signal de détection délivrée par le dispositif de détection de lumière environnante (7C) et un signal de détection délivré par le dispositif de détection de lumière arrière (7A) sont appliqués à l'entrée du dispositif de commande de cellules à cristaux liquides.

6. Miroir antireflet à cristaux liquides selon la revendication 4 ou 5, dans lequel le dispositif de commande de cellule à cristaux liquides comprend une unité d'oscillation destinée à faire osciller un signal de commande qui commande la cellule à cristaux liquides.
